# EUROPÄISCHE PATENTSCHRIFT

(11) **EP 1 121 816 B1**
(45) Veröffentlichungstag und Bekanntmachung des Hinweises auf die Patenterteilung: **13.12.2006**
(21) Anmeldenummer: 99932648.1
(22) Anmeldetag: 06.05.1999
(51) Int. Cl.: H04Q 7/00

(54) **ÜBERGABEVERFAHREN (ROAMING) FÜR MOBILE ENDEINRICHTUNGEN**
TRANSFER METHOD (ROAMING) FOR MOBILE TERMINAL DEVICES
PROCEDE DE TRANSFERT (ITINERANCE) POUR TERMINAUX MOBILES

(30) Priorität: 29.05.1998 DE 19824141
(43) Veröffentlichungstag der Anmeldung: 08.08.2001
(73) Patentinhaber: SIEMENS AKTIENGESELLSCHAFT, 80333 München (DE)
(72) Erfinder: JAHN, Alfred, D-81373 München (DE)
(86) Internationale Anmeldenummer: PCT/DE1999/001372
(87) Internationale Veröffentlichungsnummer: WO 1999/063768

(56) Entgegenhaltungen:
- DE-C- 19 705 794
- US-A- 4 748 655
- US-A- 5 509 053

## Beschreibung

Bei vielen Kommunikationssystemen werden Endeinrichtungen, die unterschiedlichen Zwecken dienen können, wie z.B. einem Übertragen von Sprach-, Video-, Fax-, Datei-, Programm- und/oder Meßdaten, in zunehmendem Maße drahtlos angekoppelt. Eine Verbindung zu derartigen mobilen Endeinrichtungen wird üblicherweise über sogenannte Basisstationen aufgebaut, die über eine Luftschnittstelle mit den mobilen Endeinrichtungen zu koppeln sind. In vielen Fällen sind die Basisstationen an eine Vermittlungseinrichtung gekoppelt, über die Verbindungen zu den mobilen Endeinrichtungen vermittelt werden. Die Vermittlungseinrichtung kann dabei an ein externes Kommunikationsnetz angeschlossen sein, wodurch auch Verbindungen zwischen den mobilen Endeinrichtungen und externen Endeinrichtungen aufgebaut werden können.

Der räumliche Bereich um eine Basisstation, in dem eine drahtlose Verbindung mit einer mobilen Endeinrichtung über diese Basisstation in vorgegebener Qualität möglich ist, wird auch als Funkzelle dieser Basisstation bezeichnet. Um einen größeren Bereich mit Verbindungsmöglichkeiten zu versorgen, sind in der Regel mehrere Basisstationen so über den zu versorgenden Bereich verteilt, daß ihre Funkzellen ein flächendeckendes oder raumfüllendes Netz bilden.

Bevor eine mobile Endeinrichtung über eine Basisstation erreichbar ist oder selbst eine Verbindung über diese Basisstation aufbauen kann, muß sich die mobile Endeinrichtung bei dieser Basisstation anmelden. Eine solche Anmeldung wird üblicherweise, durch Austausch von Funksignalen zwischen mobiler Endeinrichtung und Basisstation veranlaßt, der von einem auch als "location registration call" bezeichneten Registrierungsruf der mobilen Endeinrichtung ausgelöst wird. Dies ist nicht an eine bestehende Verbindung oder eine Verbindungsanforderung gebunden, sondern kann in einem auch als "idle-Zustand" bezeichneten Bereitschaftszustand der mobilen Endeinrichtung erfolgen.

Solange eine mobile Endeinrichtung bei einer Basisstation angemeldet ist, ist diese Basisstation für einen drahtlosen Verbindungsaufbau von bzw. zu der mobilen Endeinrichtung zuständig. Durch die Anmeldung wird das Kommunikationssystem so konfiguriert, daß bei einer späteren, an die mobile Endeinrichtung gerichteten Verbindungsanforderung eine Verbindung zur mobilen Endeinrichtung über die für diese mobile Endeinrichtung momentan zuständige Basisstation geführt wird. Verläßt eine bei einer Basisstation angemeldete mobile Endeinrichtung deren Funkzelle und gelangt in die Funkzelle einer anderen Basisstation, meldet sich die mobile Endeinrichtung bei der erstgenannten Basisstation ab, um sich bei der anderen Basisstation anzumelden. Die Konfiguration des Kommunikationssystems ändert sich dadurch u.a. insofern, als daß bei einer späteren, an die mobile Endeinrichtung gerichteten Verbindungsanforderung nun eine Verbindung über die andere Basisstation aufgebaut wird. Das Verfahren zum Anmelden einer mobilen Endeinrichtung bzw. zum Übergeben der Zuständigkeit für eine mobile Endeinrichtung, wodurch für aufzubauende Verbindungen ein über die für die mobile Endeinrichtung momentan zuständige Basisstation zur mobilen Endeinrichtung führender Leitweg festgelegt wird, wird häufig auch als "Roaming" bezeichnet.

Bei bekannten Verfahren wird das Weiterleiten von Verbindungsanforderungen an mobile Endeinrichtungen von einer im allgemeinen als Ergänzung der Vermittlungseinrichtung vorgesehenen zentralen Funkvermittlungsbaugruppe, die als Schnittstelle zwischen Basisstationen und Vermittlungseinrichtung fungiert, gesteuert. Der zentralen Funkvermittlungsbaugruppe werden dazu von den daran angeschlossenen Basisstationen Informationen über die bei den Basisstationen jeweils aktuell angemeldeten mobilen Endeinrichtungen übermittelt, aufgrund derer die zentrale Funkvermittlungsbaugruppe angeforderte Verbindungen zu mobilen Endeinrichtungen über die jeweils zuständige Basisstation aufbaut. Anordnungen und Verfahren dieser Art sind beispielsweise aus "Cordless Telecommunications in Europe" von Wally H. W. Tuttlebee (Ed.), Springer-Verlag London, 1990, Seiten 43 bis 48 und 256 bis 258 bekannt.

Als Vermittlungseinrichtungen werden häufig für drahtgebundene Kommunikation ausgelegte Systeme eingesetzt. In diesen Fällen wird die zentrale Funkvermittlungsbaugruppe seitens der Vermittlungseinrichtung wie eine Gruppe von drahtgebundenen Endeinrichtungen angesteuert. Diese Ansteuerung muß von der zentralen Funkvermittlungsbaugruppe in eine für die Verwaltung von drahtlosen Kommunikationsendeinrichtungen geeignete Ansteuerung für die angeschlossenen Basisstationen umgesetzt werden. Insbesondere muß die zentrale Funkvermittlungsbaugruppe die für eine drahtlose Kommunikation spezifischen Vorgänge, wie z.B. die mit einem An- und Abmelden von mobilen Endeinrichtungen oder mit einem Wechsel der Funkzelle verbundenen Vorgänge, selbständig steuern bzw. verwalten. Die dazu notwendige Funktionalität ist im allgemeinen sehr umfangreich und entsprechende zentrale Funkvermittlungsbaugruppen sind deshalb verhältnismäßig aufwendig.

Aus der U.S.-Patentschrift 5,509,053 ist ein Verfahren bekannt, bei dem im Rahmen einer Anmeldung einer mobilen Endeinrichtung eine diese identifizierende Endgerätekennung an eine Basisstation übermittelt wird und von der Basisstation an eine Vermittlungsstelle weitergeleitet wird, wodurch bei an die mobile Endeinrichtung gerichteten Verbindungsanforderungen ein über die Basisstation zu führender Verbindungsaufbau veranlasst wird. Dies wird erreicht, indem die mobile Endeinrichtung im Rahmen einer Anmeldeprozedur von einer Einrichtung zum Mobilitätsmanagement registriert wird. Bei einem ankommenden Ruf findet ein Informationsaustausch zwischen der Vermittlungsstelle und der Einrichtung zum Mobilitätsmanagement statt. Der Ruf kann dann derjenigen Basisstation zugestellt werden, für die die mobile Endeinrichtung registriert ist. Bei dieser Lösung entsteht allerdings ein erheblicher Aufwand, zum einem durch die Notwendigkeit einer eigenen Einrichtung zum Mobilitätsmanagement, zum anderen durch die notwendige Vernetzung der Vermittlungsstellen mit dieser Einrichtung über ein Signalisierungsnetz, sowie die Implementierung der notwendigen Protokolle in den Vermittlungsstellen zum Informationsaustausch mit der Einrichtung zum Mobilitätsmanagement.

Aufgabe der vorliegenden Erfindung ist es, Maßnahmen anzugeben, mit denen angeforderte Verbindungen zu mobilen Endeinrichtungen ohne zentrale Funkvermittlungsbaugruppe über die jeweils zuständige Basisstation mit geringem Aufwand aufgebaut werden können.

Gelöst wird diese Aufgabe erfindungsgemäß durch ein Verfahren mit den Merkmalen des Patentanspruchs 1 bzw. den Merkmalen des Patentanspruchs 3.

Durch die Anmeldung einer mobilen Endeinrichtung bei einer von mehreren an eine Vermittlungseinrichtung gekoppelten Basisstationen wird die Vermittlungseinrichtung so konfiguriert, daß bei einer späteren, an dieselbe mobile Endeinrichtung gerichteten Verbindungsanforderung eine Verbindung zu der mobilen Endeinrichtung über die betreffende Basisstation aufgebaut wird. Falls die Basisstation nicht direkt, sondern über mindestens eine zwischengeschaltete Basisstation mit der Vermittlungseinrichtung gekoppelt ist, wird die Vermittlungseinrichtung so konfiguriert, daß bei einer späteren an die mobile Endeinrichtung gerichteten Verbindungsanforderung eine Verbindung über zwischengeschaltete Basisstationen und die Basisstation, bei der die mobile Endeinrichtung momentan angemeldet ist, aufgebaut wird. Die Konfigurierung der Vermittlungseinrichtung wird dabei im wesentlichen von den jeweiligen Basisstationen, über die eine mobile Endeinrichtung an die Vermittlungseinrichtung zu koppeln ist, d.h. dezentral, gesteuert.

In Fällen, in denen keine zwischengeschalteten Basisstationen vorgesehen sind, übermittelt die Basisstation an die Vermittlungseinrichtung im Rahmen der Endgeräteanmeldung die Endgerätekennung sowie eine Steuerinformation. Dies kann unter Verwendung eines standardisierten Protokolls, z.B. gemäß der ETSI-Standard-Definition für Signalisierung QSIG für private Netze bzw. DSS1 für öffentliche Netze, erfolgen.

Falls dagegen die Basisstation über mindestens eine zwischengeschaltete Basisstation an die Vermittlungseinrichtung gekoppelt ist, wird die Endgerätekennung im Rahmen der Anmeldung bis zu derjenigen zwischengeschalteten Basisstation weitergegeben, die direkt an die Vermittlungseinrichtung angeschlossen ist. Die direkt angeschlossene Basisstation übermittelt an die Vermittlungseinrichtung die Endgerätekennung sowie eine Steuerinformation.

In beiden obengenannten Fällen wird durch die Steuerinformation ein in Zusammenhang mit drahtgebundenen Endgeräten an sich bekanntes Weiterleitungsleistungsmerkmal in der Vermittlungseinrichtung aktiviert, wobei die ebenfalls übermittelte Endgerätekennung als Parameter eingeht. Durch das Weiterleitungsleistungsmerkmal wird bei an die betreffende mobile Endeinrichtung gerichteten Verbindungsanforderungen ein über die direkt angeschlossene Basisstation bis zur mobilen Endeinrichtung führender Verbindungsaufbau - im zweiten Fall über zwischengeschaltete Basisstationen - veranlaßt.

Durch die Nutzung eines im Zusammenhang mit drahtgebundenen Endgeräten an sich bekannten Weiterleitungsleistungsmerkmals können zur Realisierung eines erfindungsgemäßen Verfahrens auch für drahtgebundene Kommunikation ausgelegte Vermittlungseinrichtungen unverändert und damit kostengünstig eingesetzt werden. Ebenso sind zur Durchführung eines erfindungsgemäßen Verfahrens keine Veränderungen an mobilen Endeinrichtungen notwendig, so daß bereits vorhandene Endeinrichtungen weiter verwendet werden können. Um die zur Realisierung eines erfindungsgemäßen Verfahrens erforderlichen Steuerfunktionen auszuführen, müssen lediglich die Basisstationen geringfügig modifiziert werden.

Ein erfindungsgemäßes Verfahren läßt sich mit Luftschnittstellen gemäß unterschiedlichen Standards zwischen mobiler Endeinrichtungen und Basisstationen realisieren, wobei auch mehrere Standards kombinierbar sind. Vorteilhafte Ausführungsformen ergeben sich insbesondere mit Luftschnittstellen gemäß den ETSI-Standard-Definitionen DECT (Digital Enhanced Cordless Telecommunications), DCS (Digital Cellular System) oder GSM (Global System for Mobile Communication) oder einer Luftschnittstelle gemäß der zur Standardisierung vorgeschlagenen UMTS-Definition (Universal Mobile Telecommunication System); ferner mit Luftschnittstellen gemäß der ARI-Standard-Definition PHS(Personal Handyphone System).

Vorteilhafte Ausführungsformen der Erfindung sind in den Unteransprüchen angegeben.

Als zu aktivierendes Weiterleitungsleistungsmerkmal kann ein für drahtgebundene Kommunikation standardisiertes Leistungsmerkmal, unter anderem ein Leistungsmerkmal zur Anrufumleitung, ein Leistungsmerkmal zur Änderung einer Zuordnung zwischen Rufnummer einer Endeinrichtung und interner Nummer eines Peripheriegeräteports oder ein anderes Leistungsmerkmal gemäß ETSI-Standard für ISDN, vorgesehen sein. Durch Aktivierung eines Leistungsmerkmals zur Anrufumleitung z.B., können für die mobile Endeinrichtung eintreffende Anrufe auf einfache Weise zur direkt angeschlossenen Basisstation umgeleitet werden, die dann eine Weiterleitung der Anrufe zur mobilen Endeinrichtung veranlaßt. In diesem Fall wird der Vermittlungseinrichtung die Endgerätekennung als Rufnummer des Endgerätes, für das eintreffende Anrufe umzuleiten sind, übermittelt.

Zur einfachen Spezifikation derjenigen Basisstation, zu der die Anrufe umzuleiten sind, kann das Weiterleitungsleistungsmerkmal z.B. in einer Weise aktiviert werden, daß die Anrufe jeweils zu der das Weiterleitungsleistungsmerkmal aktivierenden Basisstation umgeleitet werden.

Falls bei Aktivierung des Leistungsmerkmals eine explizite Angabe eines Umleitungsziels notwendig ist, kann der Vermittlungseinrichtung auch eine Basisstationskennung - der direkt angeschlossenen Basisstation - übermittelt werden, anhand welcher das Umleitungsziel festgelegt wird.

Gemäß einer vorteilhaften Weiterbildung des erfindungsgemäßen Verfahrens kann eine Basisstation nach Übermittlung der die mobile Endeinrichtung identifizierenden Endgerätekennung überprüfen, ob die mobile Endeinrichtung zur Verbindungsaufnahme über diese Basisstation berechtigt ist. Zu diesem Zweck wird eine Tabelle mit Kennungen zur Verbindungsaufnahme berechtigter Endeinrichtungen nach der übermittelten Endgerätekennung durchsucht und das Verfahren nur dann fortgesetzt, wenn ein passender Tabelleneintrag gefunden wird. Auf diese Weise kann das Kommunikationssystem beispielsweise gegen unberechtigte Benutzung geschützt werden.

Nach einer weiteren vorteilhaften Weiterbildung kann eine Basisstation Daten und/oder Signale an eine oder mehrere andere Basisstationen übertragen. Beispielsweise kann eine Basisstation bei Anmeldung einer mobilen Endeinrichtung Daten, die diese Anmeldung betreffen, einer anderen Basisstation übermitteln. So kann z.B. die Endgerätekennung der angemeldeten mobilen Endeinrichtung anderen Basisstationen übermittelt werden, um diese mobile Endeinrichtung dort - wenn angemeldet - automatisch abzumelden oder um die Konsistenz dieser Anmeldung mit den Anmeldungen bei anderen Basisstationen zu überprüfen.

Weiterhin kann eine Basisstation eine Systemkennung des Kommunikationssystems, z.B. eine sogenannte EIC-Kennung, an eine oder mehrere andere Basisstationen übertragen. Damit kann sichergestellt werden, daß mehrere Basisstationen von einer mobilen Endeinrichtung als zu einem gemeinsamen Kommunikationssystem gehörig erkannt werden können, wodurch die Administration des Kommunikationssystems insbesondere während des Roaming-Vorgangs, vereinfacht wird.

Eine weitere vorteilhafte Weiterbildung der Erfindung sieht vor, daß Daten und/oder Signale zwischen Basisstationen drahtlos übertragen werden. Zur drahtlosen Kommunikation zwischen den Basisstationen können vorzugsweise die schon in den Basisstationen vorhandenen Sende- und Empfangseinrichtungen genutzt werden. Als Übertragungsprotokoll kann dabei das für den Datenaustausch mit den mobilen Endeinrichtungen vorgesehene Übertragungsprotokoll verwendet werden. Eine Basisstation kann auf diese Weise drahtlos in das Kommunikationssystem integriert werden, indem sie drahtlos über eine andere Basisstation mit der Vermittlungseinrichtung gekoppelt wird. Dies erfordert oftmals weniger Installationsaufwand als ein drahtgebundener Anschluß. Alle zur Vermittlungseinrichtung zu übertragenden Signale oder Daten werden in einem solchen Fall erst drahtlos der anderen Basisstation und von dort der Vermittlungseinrichtung übermittelt. Die Vermittlungseinrichtung muß dazu über keine eigene Luftschnittstelle verfügen. Eine Basisstation, über die eine andere Basisstation an die Vermittlungseinrichtung angekoppelt wird, wird häufig auch als Repeater bezeichnet. Sofern die Vermittlungseinrichtung über eine geeignete Luftschnittstelle verfügt, kann eine dazu vorgesehene Basisstation auch ohne Repeater-Basisstation drahtlos in das Kommunikationssystem integriert werden.

Die Erfindung wird nachfolgend anhand eines Ausführungsbeispiels unter Bezugnahme auf die Zeichnung näher erläutert.

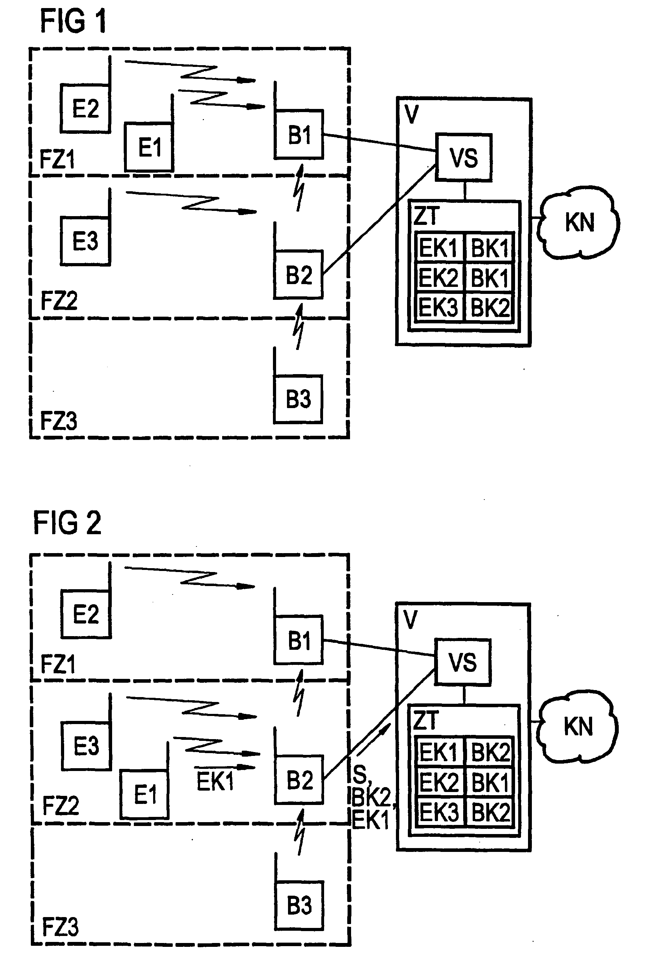

Dabei zeigen
Fig 1 bis Fig 3 ein Kommunikationssystem mit mobilen Endeinrichtungen, in unterschiedlichen Zuordnungsphasen von Basisstationen, jeweils in schematischer Darstellung.

In Fig 1 bis Fig 3 ist jeweils ein Kommunikationssystem schematisch dargestellt, das sich aus einer an ein Kommunikationsnetz KN gekoppelten Vermittlungseinrichtung V mit Vermittlungssteuerung VS, drei Basisstationen B1, B2, B3 mit zugehörigen Funkzellen FZ1, FZ2, FZ3 und drei drahtlos angekoppelten mobilen Endeinrichtungen E1, E2, E3, z.B. Schnurlos-Telefonen nach DECT-Standard oder Mobiltelefonen nach GSM-Standard, zusammensetzt. Während die Basisstationen B1 und B2 direkt an die Vermittlungseinrichtung V angeschlossen sind, ist die Basisstation B3 drahtlos über die Basisstation B2 an die Vermittlungseinrichtung V gekoppelt. Auch die direkt an die Vermittlungseinrichtung V angeschlossenen Basisstationen B1 und B2 sind, z.B. über eine DECT-Luftschnittstelle, drahtlos miteinander gekoppelt, um Signale und/oder Daten ohne Umweg über die Vermittlungseinrichtung V oder eine mobile Endeinrichtung austauschen zu können. Eine drahtlose Ankopplung ist im übrigen jeweils durch einen stilisierten Blitz angedeutet. In der Vermittlungseinrichtung V ist eine Zuordnungstabelle ZT vorgesehen, in der für jede mobile Endeinrichtung E1, E2, E3 eine diese identifizierende Endgerätekennung EK1, EK2 oder EK3 und - dieser jeweils zugeordnet - Basisstationskennungen BK1, BK2, BK3 der Basisstationen, über die eine mobile Endeinrichtung mit der Vermittlungseinrichtung V verbindbar ist, abgespeichert sind. Die Endgerätekennungen der mobilen Endeinrichtungen können beispielsweise deren Rufnummern sein. Zur Realisierung eines auf die vorliegende Erfindung aufbauenden Verfahrens genügt es, eine kostengünstige, für drahtgebundene Kommunikationssysteme ausgelegte Vermittlungseinrichtung V zu verwenden, die auch nur im Zusammenhang mit drahtgebundener Kommunikation standardisierte Leistungsmerkmale aufweist. Eine Zuordnungstabelle ZT ist in Vermittlungseinrichtungen mit Leistungsmerkmalen, wie sie zur Ausführung eines erfindungsgemäßen Verfahrens benötigt werden, in der Regel bereits enthalten.

Die in der Zeichung dargestellte Anzahl der an die Vermittlungseinrichtung V angeschlossenen Basisstationen und die Anzahl, Form und Anordnung der Funkzellen ist lediglich beispielhaft und soll der Vereinfachung der Beschreibung dienen.

In Fig 1 befinden sich die mobilen Endeinrichtungen E1 und E2 in der Funkzelle FZ1 der Basisstation B1, während sich die mobile Endeinrichtung E3 in der Funkzelle FZ2 der Basisstation B2 befindet. Alle mobilen Endeinrichtungen sind jeweils bei der Basisstation, in deren Funkzelle sie sich aufhalten angemeldet und somit über diese Basisstation mit der Vermittlungseinrichtung verbindbar. Dieser Anordnung entsprechend sind in der Zuordnungstabelle ZT den Endgerätekennungen EK1, EK2 und EK3 die Basisstationskennungen BK1, BK1 und BK2 wie folgt zugeordnet: BK1 zu EK1, BK1 zu EK2 und BK2 zu EK3.

Fig 2 zeigt einen Zustand nach einem Wechsel der mobilen Endeinrichtung E1 in die Funkzelle FZ2 der Basisstation B2. Im Zuge der Anmeldung bei dieser Basisstation B2 überträgt die mobile Endeinrichtung E1 ihre Endgerätekennung EK1 zur Basisstation B2 und wird dort als über diese Basisstation erreichbar registriert. Daraufhin übermittelt die Basisstation B2 der Vermittlungssteuerung VS eine Steuerinformation S, vorzugsweise gemäß der ETSI-Standard-Definition für Signalisierung QSIG für private Netze bzw. DSS1 für öffentliche Netze, eine diese Basisstation B2 identifizierende Basisstationskennung BK2 sowie die Endgerätekennung EK1 der mobilen Endeinrichtung E1. Durch die Steuerinformation S wird ein Leistungsmerkmal der Vermittlungseinrichtung V zur Anrufumleitung aktiviert. Ein Leistungsmerkmal zur Anrufumleitung ist auch im Bereich der drahtgebundenen Kommunikation sehr gebräuchlich und z.B. gemäß ETSI-Standard für ISDN, standardisiert. Im Rahmen eines solchen Leistungsmerkmals wird üblicherweise eine - hier als Zuordnungstabelle ZT bezeichnete - Tabelle verwaltet, in der für jede Endeinrichtung, für die eine Anrufumleitung aktiv ist, jeweils eine Stelle im Kommunikationssystem angegeben ist, zu der an diese Endeinrichtung gerichtete Verbindungsanforderungen im Rahmen der Anrufumleitung weiterzuleiten sind. In diesem Sinne wird die Zuordnungstabelle ZT durch die Aktivierung des Leistungsmerkmals zur Anrufumleitung aktualisiert, indem die übermittelte Endgerätekennung EK1 der mobilen Endeinrichtung E1 als Rufnummer des Endgeräts, für das ankommende Anrufe umzuleiten sind, und die übermittelte, das Umleitungsziel bezeichnende Basisstationskennung BK2 einander zugeordnet in die Zuordnungstabelle ZT eingetragen werden. Damit wird eine an die mobile Endeinrichtung E1 gerichtete Verbindungsanforderung von der Vermittlungseinrichtung V nach Aufsuchen der Endgerätekennung EK1 dieser mobilen Endeinrichtung in der Zuordnungstabelle ZT, gezielt zu der durch die zugeordnete Basisstationskennung BK2 identifizierten Basisstation B2 weitergegeben, und ein Verbindungsaufbau über diese Basisstation B2 zur mobilen Endeinrichtung E1 veranlaßt.

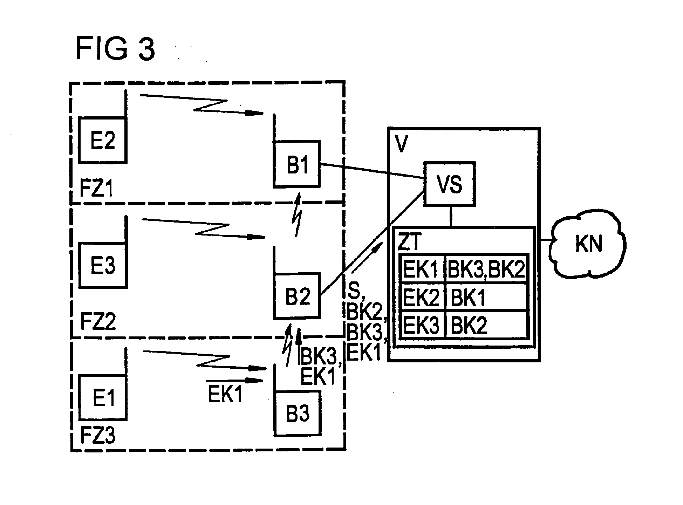

Fig 3 zeigt schließlich einen Zustand nach einem Wechsel der mobilen Endeinrichtung E1 in die Funkzelle FZ3 der drahtlos über die Basisstation B2 mit der Vermittlungseinrichtung V gekoppelten Basisstation B3. Im Zuge der Anmeldung bei dieser Basisstation B3 überträgt die mobile Endeinrichtung E1 ihre Endgerätekennung EK1 zur Basisstation B3 und wird dort als über diese Basisstation erreichbar registriert. Die Basisstation B3 überträgt daraufhin die Endgerätekennung EK1 sowie eine die Basisstation B3 identifizierende Basisstationskennung BK3 zur direkt an die Vermittlungseinrichtung V angeschlossenen Basisstation B2. Diese Basisstation B2 setzt die übermittelte Basisstationskennung BK3 und die die Basisstation B2 identifizierende Basisstationskennung BK2 zu einer den Leitweg von der Vermittlungseinrichtung V zur Basisstation B3 beschreibenden Pfadinformation (BK3,BK2) zusammen. Daraufhin übermittelt die Basisstation B2 der Vermittlungssteuerung VS die Steuerinformation S, die Endgerätekennung EK1 sowie die-Pfadinformation (BK3,BK2). Durch die Steuerinformation S wird wieder - wie oben beschrieben - ein Leistungsmerkmal der Vermittlungseinrichtung V zur Anrufumleitung aktiviert. In diesem Fall werden die übermittelte Endgerätekennung EK1 und die übermittelte Pfadinformation (BK3,BK2) einander zugeordnet in die Zuordnungstabelle ZT eingetragen. Damit kann bei einer an die mobile Endeinrichtung E1 gerichteten Verbindungsanforderung von der Vermittlungseinrichtung V nach Aufsuchen der Endgerätekennung EK1 dieser mobilen Endeinrichtung in der Zuordnungstabelle ZT, eine Verbindung gezielt über den durch die zugeordnete Pfadinformation (BK3,BK2) beschriebenen Leitweg, d.h. über die Basisstationen B2 und B3, zur mobilen Endeinrichtung E1 aufgebaut werden.

## Patentansprüche

1. Verfahren zum Steuern einer Vermittlungseinrichtung (V) mit der über angekoppelte Basisstationen (B1, B2, B3) drahtlose Verbindungen zu mobilen Endeinrichtungen (E1, E2, E3) einrichtbar sind, bei dem im Rahmen einer Anmeldung einer mobilen Endeinrichtung (E1) bei einer Basisstation (B2) von der mobilen Endeinrichtung (E1) eine diese identifizierende Endgerätekennung (EK1) an die Basisstation (B2) übermittelt wird, und
von der Basisstation (B2) an die Vermittlungseinrichtung (V) die Endgerätekennung (EK1) sowie eine Steuerinformation (S) zum Aktivieren eines in Zusammenhang mit drahtgebundenen Endgeräten an sich bekannten Weiterleitungsleistungsmerkmals in der Vermittlungseinrichtung (V) übermittelt werden, wodurch bei an die mobile Endeinrichtung (E1) gerichteten Verbindungsanforderungen ein über die Basisstation (B2) zu führender Verbindungsaufbau veranlaßt wird.

2. Verfahren nach Anspruch 1,
**dadurch gekennzeichnet,**
**daß** die Basisstation (B2), eine sie identifizierende Basisstationskennung (BK2) zur Vermittlungseinrichtung (V) überträgt zur Spezifikation der Basisstation, über die der Verbindungsaufbau bei an die mobile Endeinrichtung (E1) gerichteten Verbindungsanforderungen zu führen ist.

3. Verfahren zum Steuern einer Vermittlungseinrichtung (V) mit der über angekoppelte Basisstationen (B1, B2, B3) drahtlose Verbindungen zu mobilen Endeinrichtungen (E1, E2, E3) einrichtbar sind, bei dem im Rahmen einer Anmeldung einer mobilen Endeinrichtung (E1) bei einer ersten Basisstation (B3), die über mindestens eine zwischengeschaltete Basisstation (B2) an die Vermittlungseinrichtung (V) gekoppelt ist,
a) von der mobilen Endeinrichtung (E1) eine diese identifizierende Endgerätekennung (EK1) an die erste Basisstation (B3) übermittelt wird,
b) diese Endgerätekennung (EK1) ausgehend von der ersten Basisstation (B3) bis zu derjenigen zwischengeschalteten Basisstation (B2) weitergegeben wird, die direkt an die Vermittlungseinrichtung (V) angeschlossen ist und
c) von der direkt an die Vermittlungseinrichtung (V) angeschlossenen Basisstation (B2) an die Vermittlungseinrichtung (V) die Endgerätekennung (EK1) sowie eine Steuerinformation (S) zum Aktivieren eines in Zusammenhang mit drahtgebundenen Endgeräten an sich bekannten Weiterleitungsleistungsmerkmals in der Vermittlungseinrichtung (V) übermittelt werden, wodurch bei an die mobile Endeinrichtung (E1) gerichteten Verbindungsanforderungen ein zur ersten Basisstation (B3) zu führender Verbindungsaufbau veranlaßt wird.

4. Verfahren nach Anspruch 3,
**dadurch gekennzeichnet,**
**daß** der direkt an die Vermittlungseinrichtung (V) angeschlossenen Basisstation (B2) außerdem Information über einen Leitweg einer zwischen dieser Basisstation (B2) und der ersten Basisstation (B3) aufzubauenden Verbindung übermittelt wird, anhand der eine den Leitweg beschreibende Pfadinformation (BK3,BK2) erstellt wird, die der Vermittlungseinrichtung (V) von der direkt angeschlossenen Basisstation (B2) übermittelt wird, wodurch bei an die mobile Endeinrichtung (E1) gerichteten Verbindungsanforderungen ein über den durch die Pfadinformation (BK3,BK2) beschriebenen Leitweg zur ersten Basisstation (B3) zu führender Verbindungsaufbau veranlaßt wird.

5. Verfahren nach Anspruch 3 oder 4,
**dadurch gekennzeichnet,**
**daß** die direkt an die Vermittlungseinrichtung (V) angeschlossene Basisstation (B2), eine sie identifizierende Basisstationskennung (BK2) zur Vermittlungseinrichtung (V) überträgt zur Spezifikation der Basisstation, über die der Verbindungsaufbau bei an die mobile Endeinrichtung (E1) gerichteten Verbindungsanforderungen zu führen ist.

6. Verfahren nach einem der vorhergehenden Ansprüche,
**dadurch gekennzeichnet,**
**daß** das zu aktivierende Weiterleitungsleistungsmerkmal ein Leistungsmerkmal zur Anrufumleitung ist.

7. Verfahren nach einem der vorhergehenden Ansprüche,
**dadurch gekennzeichnet,**
**daß** das zu aktivierende Weiterleitungsleistungsmerkmal ein Leistungsmerkmal zur Änderung der Zuordnung zwischen Rufnummer einer Endeinrichtung und interner Nummer eines Peripheriegeräteports der Vermittlungseinrichtung (V) ist.

8. Verfahren nach einem der vorhergehenden Ansprüche,
**dadurch gekennzeichnet,**
**daß** eine Basisstation (B1, B2, B3) nach Übermittlung der die mobile Endeinrichtung identifizierenden Endgerätekennung (EK1) anhand einer Tabelle mit Endgerätekennungen zugelassener Endeinrichtungen überprüft, ob die mobile Endeinrichtung (E1) zur Verbindungsaufnahme über diese Basisstation (B1, B2, B3) berechtigt ist, und
**daß** nur bei positivem Prüfungsergebnis das Verfahren fortgesetzt wird.

9. Verfahren nach einem der vorhergehenden Ansprüche,
**dadurch gekennzeichnet,**
**daß** eine Basisstation die Anmeldung der mobilen Endeinrichtung (E1) betreffende Daten an eine andere Basisstation überträgt.

10. Verfahren nach einem der vorhergehenden Ansprüche,
**dadurch gekennzeichnet,**
**daß** eine Basisstation eine Berechtigung der mobilen Endeinrichtung (E1) zur Verbindungsaufnahme betreffende Daten an eine andere Basisstation überträgt.

11. Verfahren nach einem der vorhergehenden Ansprüche,
**dadurch gekennzeichnet,**
**daß** eine Basisstation eine Systemkennung des Kommunikationssystems an eine andere Basisstation überträgt.

12. Verfahren nach einem der vorhergehenden Ansprüche,
**dadurch gekennzeichnet,**
**daß** Daten und/oder Signale drahtlos zwischen Basisstationen übertragen werden.

13. Verfahren nach einem der vorhergehenden Ansprüche,
**dadurch gekennzeichnet,**
**daß** Daten und/oder Signale drahtlos zwischen einer Basisstation und der Vermittlungseinrichtung (V) übertragen werden.

## Claims

1. Method for controlling a switching device (V) which can be used to establish wireless connections to mobile terminal devices (E1, E2, E3) via coupled base stations (B1, B2, B3), wherein as part of a registration of a mobile terminal device (E1) with a base station (B2), a terminal device identifier (EK1) identifying said mobile terminal device (E1) is communicated by said mobile terminal device (E1) to the base station (B2), and
the terminal device identifier (EK1) and control information (S) for activating a forwarding feature, known per se in connection with wire-connected terminal devices, in the switching device (V) are communicated by the base station (B2) to the switching device (V), as a result of which, when connection requests are addressed to the mobile terminal device (E1), a connection setup that is to be routed via the base station (B2) is initiated.

2. Method according to claim 1,
**characterised in that**
the base station (B2) transmits a base station identifier (BK2) identifying said base station to the switching device (V) for specification of the base station via which the connection setup is to be routed when connection requests are addressed to the mobile terminal device (E1).

3. Method for controlling a switching device (V) which can be used to establish wireless connections to mobile terminal devices (E1, E2, E3) via coupled base stations (B1, B2, B3), wherein as part of a registration of a mobile terminal device (E1) with a first base station (B3) which is coupled to the switching device (V) via at least one interposed base station (B2),
a) a terminal device identifier (EK1) identifying the mobile terminal device (E1) is communicated by said mobile terminal device (E1) to the first base station (B3),
b) said terminal device identifier (EK1) is passed on, starting from the first base station (B3), as far as that interposed base station (B2) which is directly connected to the switching device (V) and
c) the terminal device identifier (EK1) and control information (S) for activating a forwarding feature, known per se in connection with wire-connected terminal devices, in the switching device (V) are communicated by the base station (B2) directly connected to the switching device (V) to said switching device (V), as a result of which, when connection requests are addressed to the mobile terminal device (E1), a connection setup that is to be routed to the first base station (B3) is initiated.

4. Method according to claim 3,
**characterised in that**
information relating to a route of a connection that is to be set up between the base station (B2) directly connected to the switching device (V) and the first base station (B3) is also communicated to said directly connected base station (B2), on the basis of which information path information (BK3, BK2) describing the route is generated and communicated to the switching device (V) by the directly connected base station (B2), as a result of which, when connection requests are addressed to the mobile terminal device (E1), a connection setup that is to be routed via the route described by the path information to the first base station (B3) is initiated.

5. Method according to claim 3 or 4,
**characterised in that**
the base station (B2) directly connected to the switching device (V) transmits a base station identifier (BK2) identifying said base station to the switching device (V) for the purpose of specifying the base station via which the connection setup is to be routed when connection requests are addressed to the mobile terminal device (E1).

6. Method according to one of the preceding claims,
**characterised in that**
the forwarding service feature to be activated is a service feature for call diversion.

7. Method according to one of the preceding claims,
**characterised in that**
the forwarding service feature to be activated is a service feature for changing the assignment between a call number of a terminal device and an internal number of a peripheral device port of the switching device (V).

8. Method according to one of the preceding claims,
**characterised in that**
a base station (B1, B2, B3), after communicating the terminal device identifier (EK1) identifying the mobile terminal device, checks against a table containing terminal device identifiers of approved terminal devices whether the mobile terminal device (E1) is authorised to set up connections via said base station (B1, B2, B3), and that the method is continued only if the result of the check is positive.

9. Method according to one of the preceding claims,
**characterised in that**
one base station transmits data relating to the registration of the mobile terminal device (E1) to another base station.

10. Method according to one of the preceding claims,
**characterised in that**
one base station transmits data relating to an authorisation of the mobile terminal device (E1) to set up connections to another base station.

11. Method according to one of the preceding claims,
**characterised in that**
one base station transmits a system identifier of the communication system to another base station.

12. Method according to one of the preceding claims,
**characterised in that**
data and/or signals are transmitted wirelessly between base stations.

13. Method according to one of the preceding claims,
**characterised in that**
data and/or signals are transmitted wirelessly between a base station and the switching device (V).

## Revendications

1. Procédé de commande d'un dispositif de commutation (V) permettant d'établir des liaisons sans fil vers des terminaux mobiles (E1, E2, E3) via des stations de base couplées (B1, B2, B3), dans lequel est transmis, dans le cadre d'une demande d'accès d'un terminal mobile (E1) à une station de base (B2), par le terminal mobile (E1), à la station de base (B2), un identificateur de terminal (EK1) identifiant ledit terminal mobile, et l'identificateur de terminal (EK1) ainsi qu'une information de commande (S) pour activer une caractéristique de prestation de réacheminement en soi connue dans le contexte de terminaux filaires dans le dispositif de commutation (V) sont transmis de la station de base (B2) au dispositif de commutation (V), ce qui, étant donné des demandes de liaisons adressées au terminal mobile (E1), provoque un établissement de liaison à faire passer via la station de base (B2).

2. Procédé selon la revendication 1, **caractérisé en ce que** la station de base (B2) transmet un identificateur de station de base (BK2) l'identifiant au dispositif de commutation (V) pour spécifier la station de base via laquelle l'établissement de liaison doit passer dans le cas de demandes de liaisons adressées au terminal mobile (E1).

3. Procédé de commande d'un dispositif de commutation (V) permettant d'établir des liaisons sans fil vers des terminaux mobiles (E1, E2, E3) via des stations de base couplées (B1, B2, B3), dans lequel, dans le cadre d'une demande d'accès d'un terminal mobile (E1) à une première station de base (B3) qui est couplée au dispositif de commutation (V) via au moins une station de base intermédiaire (B2),
a) est transmis, par le terminal mobile (E1), à la première station de base (B3), un identificateur de terminal (EK1) identifiant ledit terminal mobile;
b) cet identificateur de terminal (EK1), partant de la première station de base (B3), est retransmis jusqu'à la station de base intermédiaire (B2) qui est raccordée directement au dispositif de commutation (V) et
c) sont transmis, de la station de base (B2) raccordée directement au dispositif de commutation (V), au dispositif de commutation (V), l'identificateur de terminal (EK1) ainsi qu'une information de commande (S) pour activer une caractéristique de prestation de réacheminement en soi connue dans le contexte de terminaux filaires dans le dispositif de commutation (V), ce qui, étant donné des demandes de liaisons adressées au terminal mobile (E1), provoque un établissement de liaison à amener à la première station de base (B3).

4. Procédé selon la revendication 3, **caractérisé en ce qu'**est en outre transmise à la station de base (B2) raccordée directement au dispositif de commutation (V), une information sur une route d'une liaison à établir entre cette station de base (B2) et la première station de base (B3), à l'aide de laquelle est établie une information de chemin (BK3, BK2) décrivant une route, laquelle information est transmise au dispositif de commutation (V) par la station de base (B2) directement raccordée, ce qui, étant donné des demandes de liaisons adressées au terminal mobile (E1), provoque un établissement de liaison à faire passer par la route décrite par l'information de chemin (BK3, BK2) pour aller jusqu'à la première station de base (B3) .

5. Procédé selon la revendication 3 ou 4, **caractérisé en ce que** la station de base (B2) raccordée directement au dispositif de commutation (V) transmet au dispositif de commutation (V) un identificateur de station de base (BK2) l'identifiant pour spécifier la station de base via laquelle l'établissement de liaison doit passer dans le cas de demandes de liaisons adressées au terminal mobile (E1).

6. Procédé selon l'une des revendications précédentes, **caractérisé en ce que** la caractéristique de prestation de réacheminement à activer est une caractéristique de prestation pour déviation d'appels.

7. Procédé selon l'une des revendications précédentes, **caractérisé en ce que** la caractéristique de prestation de réacheminement à activer est une caractéristique pour modification de l'association entre numéro d'appel d'un terminal et numéro interne d'un port d'appareil périphérique du dispositif de commutation (V).

8. Procédé selon l'une des revendications précédentes, **caractérisé en ce qu'**une station de base (B1, B2, B3), après transmission de l'identificateur de terminal (EK1) identifiant le terminal mobile, vérifie, à l'aide d'une table contenant des identificateurs de terminaux de terminaux autorisés, si le terminal mobile (E1) est autorisé à établir une liaison via cette station de base (B1, B2, B3) et **en ce que** le procédé ne se poursuit que si le résultat de la vérification est positif.

9. Procédé selon l'une des revendications précédentes, **caractérisé en ce qu'**une station de base transmet à une autre station de base des données concernant la demande d'accès du terminal mobile (E1).

10. Procédé selon l'une des revendications précédentes, **caractérisé en ce qu'**une station de base transmet à une autre station de base des données concernant une autorisation du terminal mobile (E1) à établir une liaison.

11. Procédé selon l'une des revendications précédentes, **caractérisé en ce qu'**une station de base transmet à une autre station de base un identificateur système du système de communication.

12. Procédé selon l'une des revendications précédentes, **caractérisé en ce que** des données et/ou des signaux sont transmis sans fil entre des stations de base.

13. Procédé selon l'une des revendications précédentes, **caractérisé en ce que** des données et/ou des signaux sont transmis sans fil entre une station de base et le dispositif de commutation (V).
